# EUROPEAN PATENT APPLICATION

(11) **EP 4 773 658 A1**
(43) Date of publication of application: **08.07.2026**
(21) Application number: 23950309.7
(22) Date of filing: 01.09.2023
(51) Int. Cl.: H04W 24/06, H04L 41/16

(54) **COMMUNICATION METHOD, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: YANG, Xing, Beijing 100085 (CN)
(74) Representative: Dehns Germany Partnerschaft mbB
(86) International application number: PCT/CN2023/116627
(87) International publication number: WO 2025/043734

(57) **Abstract**

The present invention relates to a communication method, a terminal, a network device, a communication system, and a storage medium. The communication method comprises: a terminal sends a data set to a network device, the data set comprising data obtained multiple times. By using the communication method of the present invention, a terminal carries a data set in one report, and the data set comprises data obtained multiple times by the terminal, such that a network device can quickly collect data, and the signaling consumption can be reduced.

## Description

### TECHNICAL FIELD

The present disclosure relates to the technical field of communication, and in particular, to a communication method, a terminal, a network device, a communication system and a storage medium.

### BACKGROUND

Machine learning algorithm is one of the important methods to implement artificial intelligence (AI) technology. Machine learning algorithm needs to use a large amount of training data to train the model, and the trained model can predict events. In many fields, the model trained based on machine learning technology can obtain very accurate prediction results. In the communication field, models can also be used for prediction and reasoning, thereby improving the performance of the communication system.

### SUMMARY

The embodiments of the present disclosure provide a communication method, a terminal, a network device, a communication system and a storage medium.

According to a first aspect of the embodiments of the present disclosure, a communication method is proposed, the method including:
sending, by a terminal, a data set to a network device, where the data set includes data acquired multiple times.

According to a second aspect of the embodiments of the present disclosure, a communication method is proposed, the method including:
receiving, by a network device, a data set sent by a terminal, where the data set includes data acquired by the terminal multiple times; and
training, updating or controlling, by the network device, an artificial intelligence (AI) model according to the data set.

According to a third aspect of the embodiments of the present disclosure, a terminal is provided, the terminal including:
a transceiver module, configured to send a data set to a network device, where the data set includes data acquired multiple times.

According to a fourth aspect of the embodiments of the present disclosure, a network device is provided, the network device including:
a transceiver module, configured to receive a data set sent by a terminal, where the data set includes data acquired by the terminal multiple times; and
a processing module, configured to train, update or control an AI model according to the data set.

According to a fifth aspect of the embodiments of the present disclosure, a terminal is provided, the terminal including:
one or more processors; and a memory coupled to the processor, where the memory stores executable instructions, and when the executable instructions are executed by the processor, the terminal executes the communication method described in the first aspect.

According to a sixth aspect of the embodiments of the present disclosure, a network device is provided, the network device including:
one or more processors; and a memory coupled to the processor, where the memory stores executable instructions, and when the executable instructions are executed by the processor, the network device executes the communication method described in the second aspect.

According to a seventh aspect of the embodiments of the present disclosure, a communication system is proposed, including a terminal and a network device, where the terminal is configured to implement the communication method described in the first aspect, and the network device is configured to implement the communication method described in the second aspect.

According to an eighth aspect of the embodiments of the present disclosure, a storage medium is proposed, where the storage medium stores instructions, and when the instructions are executed on a communication device, the communication device executes the communication method described in the first aspect or the second aspect.

By adopting the above technical solutions of the present disclosure, at least the following beneficial technical effects can be achieved.

The terminal carries the data set in one report, and the data set includes data acquired by the terminal multiple times, which is conducive to the network device to quickly collect data and reduce signaling consumption.

### BRIEF DESCRIPTION OF THE DRAWINGS

In order to more clearly illustrate the technical solutions in the embodiments of the present disclosure, the drawings required for describing the embodiments are introduced below. The following drawings are only some embodiments of the present disclosure and do not impose specific limitations on the protection scope of the present disclosure.
FIG. 1 is an exemplary schematic diagram of an architecture of a communication system provided according to an embodiment of the present disclosure.
FIG. 2 is an interactive schematic diagram of a communication method according to an embodiment of the present disclosure.
FIG. 3A is a flowchart of a communication method according to an embodiment of the present disclosure.
FIG. 3B is a flowchart of a communication method according to an embodiment of the present disclosure.
FIG. 3C is a flowchart of a communication method according to an embodiment of the present disclosure.
FIG. 4A is a flowchart of a communication method according to an embodiment of the present disclosure.
FIG. 4B is a flowchart of a communication method according to an embodiment of the present disclosure.
FIG. 5A is an interactive schematic diagram of a communication method according to an embodiment of the present disclosure.
FIG. 5B is an interactive schematic diagram of a communication method according to an embodiment of the present disclosure.
FIG. 6A is a schematic diagram of a structure of a terminal proposed in an embodiment of the present disclosure.
FIG. 6B is a schematic diagram of a structure of a network device proposed in an embodiment of the present disclosure.
FIG. 7A is a schematic diagram of a structure of a communication device proposed in an embodiment of the present disclosure.
FIG. 7B is a schematic diagram of a structure of a chip proposed in an embodiment of the present disclosure.

### DETAILED DESCRIPTION

The embodiments of the present disclosure provide a communication method, a terminal, a network device, a communication system and a storage medium.

In a first aspect, an embodiment of the present disclosure proposes a communication method, the method including: a terminal sending a data set to a network device, the data set including data acquired multiple times.

In the above embodiment, the terminal carries a data set in one report, and the data set includes data acquired by the terminal multiple times, which is conducive to the network device to quickly collect data and reduce signaling consumption.

In combination with some embodiments of the first aspect, in some embodiments, the data set is used for the network device to train, update or control an AI model.

In the above embodiment, the terminal carries a large amount of data in one report, which is conducive to the network device to quickly collect a large amount of data for use in services such as training, updating or controlling the AI model.

In combination with some embodiments of the first aspect, in some embodiments, the data content of the data includes at least one of the following:
a beam identifier; a beam measurement result; a cell identifier; a cell measurement result; a location where the terminal acquires the data; an output value of an AI model on the terminal; an input value of the AI model on the terminal; a frequency of a serving cell of the terminal; time when the terminal acquires the data; and a speed at which the terminal acquires the data.

In the above embodiment, the terminal can carry one or more data of the beam identifier, the beam measurement result, the cell identifier, the cell measurement result, the location of the terminal, the output value of the AI model on the terminal, the input value of the AI model on the terminal, the frequency of the serving cell of the terminal, the time of the terminal, and the speed of the terminal in one report, which is conducive to the network device to quickly collect different types of data for different services.

In combination with some embodiments of the first aspect, in some embodiments, the beam identifier is an identifier of a beam that the network device instructs the terminal to measure; or, the beam identifier is an identifier of a beam corresponding to the top N beam measurement result(s) in a beam measurement result sequence, and the beam measurement result sequence is obtained by sorting the signal quality corresponding to each beam measurement result from high to low, where N is a natural number.

In the above embodiment, it is regulated that the beam identifier in the data set reported by the terminal can be either the beam identifier configured by the network or the beam identifier determined by the terminal, which is conducive to sending different data required by different services to the network device, thereby expanding the service applicability of the communication method in the present disclosure.

In combination with some embodiments of the first aspect, in some embodiments, the cell identifier is an identifier of a cell that the network device instructs the terminal to measure; or, the cell identifier is an identifier of a cell corresponding to the top M cell measurement result(s) in a cell measurement result sequence, and the cell measurement result sequence is obtained by sorting the signal quality corresponding to each cell measurement result from high to low, where M is a natural number.

In the above embodiments, it is regulated that the cell identifier in the data set reported by the terminal can be either a cell identifier configured by the network or a cell identifier determined by the terminal, which is conducive to expanding the applicable service scenarios of the communication method of the present disclosure.

In combination with some embodiments of the first aspect, in some embodiments, before the terminal sends a data set to a network device, the method includes: the terminal acquiring and storing the data according to a data collection configuration.

In the above embodiment, since data can be acquired and collected according to the data collection configuration to obtain a data set, this regulates the generation manner of the data set and the data content included in the data set. Moreover, this manner supports changing the generation manner of the data set and the data content included in the data set by changing the data collection configuration. Therefore, this manner is highly flexible and applicable.

In combination with some embodiments of the first aspect, in some embodiments, the data collection configuration includes a trigger condition, and the trigger condition is used to trigger the execution of acquiring and storing the data;
the trigger condition includes at least one of the following conditions:
a current time is within a preset time range;
the terminal is located in a preset area;
a data volume of the data set is less than a first threshold;
a beam measurement result meets a first preset condition;
a cell measurement result meets a second preset condition;
a mobile state of the terminal meets a third preset condition;
a performance of an AI model on the terminal meets a fourth preset condition;
a data distribution characteristic of input data of the AI model on the terminal meets a fifth preset condition; and
a data distribution characteristic of output data of the AI model on the terminal meets a sixth preset condition.

In the above embodiments, due to the diversity of trigger conditions, the terminal can be triggered to acquire and store data in a variety of situations to obtain data in different situations, thereby making the obtained data diverse.

In combination with some embodiments of the first aspect, in some embodiments, the data collection configuration includes a start time and an end time;
the method further includes: the terminal determining the preset time range according to the start time and the end time.

In the above embodiment, a manner of pre-configuring a statically preset time range is provided, which can reduce signaling consumption, such as signaling used by the network device to frequently and dynamically configure the preset time range for the terminal.

In combination with some embodiments of the first aspect, in some embodiments, the preset time range is a time range corresponding to a running state of a timer; the data collection configuration includes a first duration;
the method further includes: the terminal determining that a first indication sent by the network device is received, and/or determining that an initial data is acquired, and starting the timer, where the first indication is used by the network device to instruct the terminal to start the timer; the terminal determining that a running time of the timer reaches the first duration, and stopping the timer.

In the above embodiment, a manner for dynamically setting and determining the preset time range is provided, which increases the flexibility of the solution.

In combination with some embodiments of the first aspect, in some embodiments, the data collection configuration includes a preset area list, and the preset area list includes at least one cell identifier; and
the method further includes: the terminal determining that the preset area list includes the identifier of the serving cell of the terminal, and determining that the terminal is located in the preset area.

In the above embodiment, according to the identifier of the serving cell of the terminal and the preset area list, it can be quickly determined whether the location of the terminal is within the preset area.

In combination with some embodiments of the first aspect, in some embodiments, the data collection configuration includes a preset geographic location coordinate; and
the method further includes: the terminal determining that a location of the terminal is within a location range determined according to the preset geographical location coordinate, and determining that the terminal is located in the preset area.

In the above embodiment, according to the location of the terminal and the distance from the preset geographic location coordinate, it can be determined whether the location of the terminal is within the preset area, and this manner is conducive to flexible configuration of the preset geographic location coordinate based on needs, and the configuration manner is simple and efficient.

In combination with some embodiments of the first aspect, in some embodiments, the data collection configuration includes a preset period; and
the terminal acquiring and storing the data according to the data collection configuration, includes: the terminal acquiring and storing the data according to the preset period.

In the above embodiment, the manner of periodically acquiring and storing data is conducive to both acquiring rich data and reducing energy consumption of the terminal.

In combination with some embodiments of the first aspect, in some embodiments, before the terminal sends a data set to a network device, the method includes: the terminal determining that a data sending condition is met.

In the above embodiment, the sending opportunity of the data set is standardized, which is beneficial to the scheduling of uplink resources.

In combination with some embodiments of the first aspect, in some embodiments, the data sending condition includes at least one of the following conditions:
the terminal has an uplink resource, and the uplink resource supports carrying the data set;
the terminal performs measurement reporting, and a signaling used for measurement reporting supports carrying the data set;
a data volume of the data set is greater than or equal to a first threshold;
the terminal is located outside a preset area;
a current time is outside a preset time range; and
the terminal receives a second indication sent by the network device, where the second indication is used by the network device to instruct the terminal to send the data set.

In the above embodiments, a variety of data sending conditions are provided, which can enhance the flexibility of data sending.

In combination with some embodiments of the first aspect, in some embodiments, the method further includes:
the terminal determining that a data deletion condition is met, and deleting the data set and/or data collection configuration.

In the above embodiment, in the case that the data deletion condition is met, deleting the data set and/or the data collection configuration is beneficial to releasing the storage resources of the terminal and improving the utilization rate of the storage resource of the terminal.

In combination with some embodiments of the first aspect, in some embodiments, the data deletion condition includes at least one of the following conditions:
the terminal has successfully sent the data set to the network device;
the terminal is located outside the preset area;
the current time is outside the preset time range;
a storage duration of the data set is greater than or equal to a second threshold;
the terminal switches from a connected state to an idle state;
the terminal switches from the connected state to an inactive state; and
the terminal receives a third indication sent by the network device, where the third indication is used by the network device to instruct the terminal to delete the data set and/or the data collection configuration.

In the above embodiments, a variety of data deletion conditions are provided, which can enhance the flexibility of deleting data.

In combination with some embodiments of the first aspect, in some embodiments, before the terminal sends the data set to the network device, the method includes: the terminal sending a fourth indication to the network device, where the fourth indication is used by the terminal to indicate to the network device that the data set is stored in the terminal;
the terminal sending the data set to the network device, includes: the terminal determining that a fifth indication sent by the network device is received, and sending the data set to the network device, where the fifth indication is used by the network device to instruct the terminal to send the data set.

In the above embodiment, the terminal actively notifies the network device that there is a data set that can be sent on the terminal, which can facilitate the network device to choose whether to instruct the terminal to report the data set based on its own needs, and instruct the terminal to report the data set when the network device needs the data set. This manner can avoid the resource consumption problem and the situation where the reported data set is useless to the network device, caused by the terminal reporting the data set when the network device does not need the data set.

In a second aspect, an embodiment of the present disclosure provides a communication method, the method including:
the network device receiving a data set sent by a terminal, where the data set includes data acquired by the terminal multiple times;
the network device training, updating or controlling an AI model according to the data set.

In combination with some embodiments of the second aspect, in some embodiments, a data content of the data includes at least one of the following:
a beam identifier;
a beam measurement result;
a cell identifier;
a cell measurement result;
a location where the terminal acquires the data;
an output value of an AI model on the terminal;
an input value of the AI model on the terminal;
a frequency of a serving cell of the terminal;
time when the terminal acquires the data;
a speed at which the terminal acquires the data.

In combination with some embodiments of the second aspect, in some embodiments, the beam identifier is the identifier of the beam that the network device instructs the terminal to measure; or, the beam identifier is the identifier of the beam corresponding to the top N beam measurement result(s) in a beam measurement result sequence, and the beam measurement result sequence is obtained by the terminal by sorting the signal quality corresponding to each beam measurement result from high to low, where N is a natural number.

In combination with some embodiments of the second aspect, in some embodiments, the cell identifier is an identifier of a cell that the network device instructs the terminal to measure; or, the cell identifier is an identifier of a cell corresponding to the top M cell measurement result(s) in a cell measurement result sequence, and the cell measurement result sequence is obtained by the terminal by sorting the signal quality corresponding to each cell measurement result from high to low, where M is a natural number.

In combination with some embodiments of the second aspect, in some embodiments, before the network device receives a data set sent by a terminal, the method includes:
the network device sending a data collection configuration to the terminal, where the data collection configuration is used to instruct the terminal to acquire and store the data according to the data collection configuration to obtain the data set.

In combination with some embodiments of the second aspect, in some embodiments, the data collection configuration includes a trigger condition, and the trigger condition is used for the terminal to trigger the execution of acquiring and storing the data;
the trigger condition includes at least one of the following conditions:
a current time of the terminal is within a preset time range;
the terminal is located in a preset area;
a data volume of the data set is less than a first threshold;
a beam measurement result meets a first preset condition;
a cell measurement result meets a second preset condition;
a mobile state of the terminal meets a third preset condition;
a performance of an AI model on the terminal meets a fourth preset condition;
a data distribution characteristic of the input data of the AI model on the terminal meets a fifth preset condition; and
a data distribution characteristic of the output data of the AI model on the terminal meets a sixth preset condition.

In combination with some embodiments of the second aspect, in some embodiments, the data collection configuration includes a start time and an end time, and the start time and the end time are used by the terminal to determine the preset time range.

In combination with some embodiments of the second aspect, in some embodiments, the data collection configuration includes a first duration; and
the method further includes: the network device sending a first indication to the terminal, where the first indication is used by the network device to instruct the terminal to start a timer; the first indication and the first duration are used by the terminal to determine a time range corresponding to a running state of the timer and to determine the preset time range.

In combination with some embodiments of the second aspect, in some embodiments, the data collection configuration includes a preset area list, the preset area list includes at least one cell identifier; and the preset area list is used by the terminal to determine whether it is located in the preset area.

In combination with some embodiments of the second aspect, in some embodiments, the data collection configuration includes a preset geographic location coordinate; and the preset geographic location coordinate is used by the terminal to determine whether it is located in the preset area.

In combination with some embodiments of the second aspect, in some embodiments, the data collection configuration includes a preset period; and the preset period is used to instruct the terminal to periodically acquire and store the data.

In combination with some embodiments of the second aspect, in some embodiments, the data set is sent by the terminal to the network device after determining that a data sending condition is met.

In combination with some embodiments of the second aspect, in some embodiments, the data sending condition includes at least one of the following conditions:
the terminal has an uplink resource, and the uplink resource supports carrying the data set;
the terminal performs measurement reporting, and a signaling used for measurement reporting supports carrying the data set;
a data volume of the data set is greater than or equal to a first threshold;
the terminal is located outside a preset area;
a current time of the terminal is outside a preset time range;
the terminal receives a second indication sent by the network device, where the second indication is used by the network device to instruct the terminal to send the data set.

In combination with some embodiments of the second aspect, in some embodiments, the method further includes: the network device sending a third indication to the terminal, and the third indication is used by the network device to instruct the terminal to delete the data set and/or the data collection configuration.

In combination with some embodiments of the second aspect, in some embodiments, before the network device receives a data set sent by a terminal, the method includes: the network device receiving a fourth indication sent by the terminal, where the fourth indication is used to indicate that the data set is stored in the terminal; and the network device sending a fifth indication to the terminal, where the fifth indication is used by the network device to instruct the terminal to send the data set.

In a third aspect, an embodiment of the present disclosure proposes a terminal, which includes at least one of a transceiver module and a processing module; where the terminal is used to execute the optional implementations of the first aspect.

In a fourth aspect, an embodiment of the present disclosure proposes a network device, which includes at least one of a transceiver module and a processing module; where the network device is used to execute the optional implementations of the second aspect.

In a fifth aspect, an embodiment of the present disclosure proposes a terminal, which includes: one or more processors; and a memory coupled to the processor, where executable instructions are stored in the memory, and when the executable instructions are executed by the processor, the terminal executes the optional implementations of the first aspect.

In a sixth aspect, an embodiment of the present disclosure proposes a network device, which includes: one or more processors; and a memory coupled to the processor, where executable instructions are stored in the memory, and when the executable instructions are executed by the processor, the network device executes the optional implementations of the second aspect.

In the seventh aspect, an embodiment of the present disclosure proposes a communication system, which includes a terminal and a network device, where the terminal is configured to execute the method described in the optional implementations of the first aspect, and the network device is configured to execute the method described in the optional implementations of the second aspect.

In an eighth aspect, an embodiment of the present disclosure proposes a storage medium, where the storage medium stores instructions. When the instructions are executed on a communication device, the communication device executes the method described in the optional implementations of the first and second aspects.

In a ninth aspect, an embodiment of the present disclosure proposes a program product. When the program product is executed by a communication device, the communication device executes the method described in the optional implementations of the first and second aspects.

In a tenth aspect, an embodiment of the present disclosure proposes a computer program, which, when executed on a computer, enables the computer to execute the method described in the optional implementations of the first and second aspects.

In an eleventh aspect, an embodiment of the present disclosure provides a chip or a chip system, where the chip or the chip system includes a processing circuit configured to execute the method described in the optional implementations of the first aspect and the second aspects.

It is understandable that the above-mentioned terminals, network devices, communication systems, storage media, program products, computer programs, chips or chip systems are all used to execute the methods proposed in the embodiments of the present disclosure. Therefore, the beneficial effects that can be achieved can refer to the beneficial effects in the corresponding methods, which will not be repeated here.

The embodiments of the present disclosure provide a communication method, a terminal, a network device, a communication system, and a storage medium. In some embodiments, the communication method can be replaced by the terms, such as the information processing method, the data reporting method, and the data collection method, and the communication system can be replaced by the terms, such as the information processing system, the data reporting system, and the data collection system.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or may mean "one or more", "at least one", etc. For example, when using articles such as "a", "an", "the" in English in translation, the noun after the article may be understood as a singular expression or a plural expression.

In the embodiments of the present disclosure, "a plurality of" refers to two or more.

In some embodiments, terms such as "at least one of", "one or more", "a plurality of", "multiple" and the like can be used interchangeably.

In some embodiments, "at least one of A and B", "A and/or B", "A in one case, B in another case", "in response to one case, A, in response to another case, B", etc., may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also similar.

In some embodiments, the recording manner of "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also similar.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute redundant restrictions due to the use of prefixes. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first apparatus" as an example, the number of "apparatuses" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, terms such as "time/frequency", "time/frequency domain", etc. refer to the time domain and/or the frequency domain.

In some embodiments, "in response to...", "in response to determining...", "in the case of...", "when...", "while...", "if..." and "in case of..." are interchangeable.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatuses, etc. can be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" can be used interchangeably.

In some embodiments, "network" may be interpreted as apparatuses included in the network (e.g., an access network device, a core network device, etc.).

In some embodiments, the terms "access network device (AN device), "radio access network device (RAN device)", "base station (BS)", "radio base station", "fixed station", "node", "access point", "transmission point (TP)", "reception point (RP)", "transmission and/or reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like can be used interchangeably.

In some embodiments, the terms "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like can be used interchangeably.

In some embodiments, the access network device, the core network device, or the network device can be replaced by a terminal. For example, the various embodiments of the present disclosure can also be applied to a structure in which the communication between the access network device, the core network device, or the network device and the terminal is replaced by the communication between multiple terminals (for example, device-to-device (D2D), vehicle-to-everything (V2X), etc.). In this case, it can also be set as a structure in which the terminal has all or part of the functions of the access network device. In addition, terms such as "uplink" and "downlink" can also be replaced by terms corresponding to communication between terminals (for example, "side"). For example, uplink channels, downlink channels, etc. can be replaced by side channels, and uplinks, downlinks, etc. can be replaced by sidelinks.

In some embodiments, the terminal may be replaced by an access network device, a core network device, or a network device. In this case, it can be set as a structure in which the access network device, core network device, or network device has all or part of the functions of the terminal.

In some embodiments, the acquisition of data, information, etc. may comply with the laws and regulations of the country where the data is acquired.

In some embodiments, data, information, etc. may be acquired with the user's consent.

In addition, each element, each row, or each column in the table of the embodiments of the present disclosure may be implemented as an independent embodiment, and the combination of any elements, any rows, or any columns may also be implemented as an independent embodiment.

Although the operations are described in a specific order in the accompanying drawings in the embodiments of the present disclosure, it should not be understood that it is required to perform these operations in the specific order shown or in a serial order, or to perform all the operations shown to obtain the desired result. In certain environments, multitasking and parallel processing may be advantageous. In addition, sending multiple information through the same message is also advantageous.

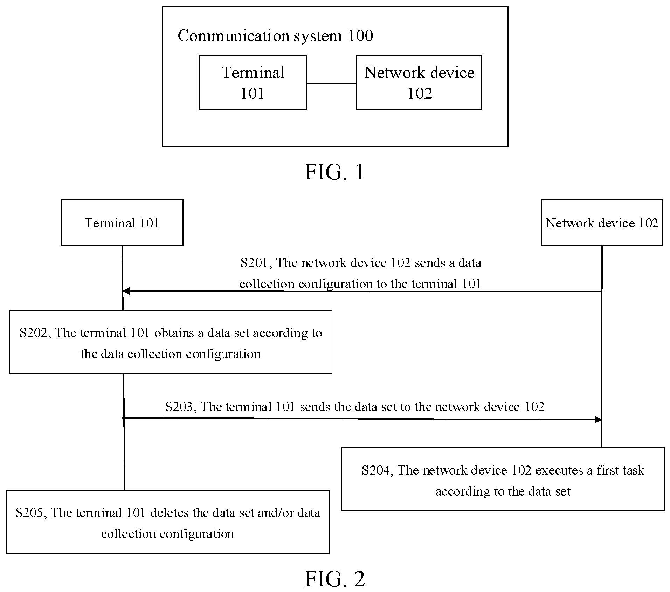

FIG. 1 is a schematic diagram of an architecture of a communication system according to an embodiment of the present disclosure. As shown in FIG. 1, the communication system 100 may include a terminal 101 and a network device 102.

In some embodiments, for example, the terminal 101 includes at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include at least one of an access network device and a core network device.

Optionally, the access network device is, for example, a node or device that accesses a terminal to a wireless network. The access network device may include at least one of an evolved Node B (eNB), a next generation evolved Node B (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a baseband unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the network device 102 is a base station. Optionally, the base station is, for example, a macro base station, a micro base station (also called a small station), a relay station, an access point, a 5G base station or a future base station, a satellite, a transmission point (Transmitting and Receiving Point, TRP), a Transmitting Point (TP), a mobile switching center, or other devices that assume the function of the base station in a communication system, etc., which are not specifically limited in the embodiments of the present disclosure. For the convenience of description, in all embodiments of the present disclosure, the apparatuses that provide wireless communication functions for terminal devices are collectively referred to as network devices or base stations.

In some embodiments, the network device 102 is a core network device. The core network device may be a device including a first network element, a second network element, etc., or may be a plurality of devices or a group of devices including all or part of the first network element, the second network element, etc. The network element may be virtual or physical. The core network may include, for example, at least one of an Evolved Packet Core (EPC), a 5G Core Network (5GCN), and a Next Generation Core (NGC).

In some embodiments, the technical solution of the present disclosure may be applicable to the Open RAN architecture. In this case, the interface between the access network devices or within the access network device involved in the embodiments of the present disclosure may become internal interfaces of Open RAN, and the processes and information interactions between these internal interfaces may be implemented through software or programs.

In some embodiments, the access network device may be composed of a central unit (CU) and a distributed unit (DU), where the CU may also be called a control unit. The CU-DU structure may be used to split the protocol layer of the access network device, with some functions of the protocol layer being centrally controlled by the CU, and the remaining part or all of the functions of the protocol layer being distributed in the DU, and the DU being centrally controlled by the CU, but not limited thereto.

It can be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. A person skilled in the art can know that with the evolution of the system architecture and the emergence of new service scenarios, the technical solutions proposed in the embodiments of the present disclosure are also applicable to similar technical problems.

The following embodiments of the present disclosure may be applied to the communication system 100 shown in FIG. 1, or part of the subject, but are not limited thereto. The subjects shown in FIG. 1 are examples, and the communication system may include all or part of the subjects in FIG. 1, or may include other subjects other than FIG. 1, and the number and form of the subjects are arbitrary, and the subjects may be physical or virtual, and the connection relationship between the subjects is an example, and the subjects may be connected or disconnected, and the connection may be in any manner, and may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, the fourth generation mobile communication system (4G), the fifth generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device to Device (D2D) system, Machine to Machine (M2M) system, Internet of Things (IoT) system, Vehicle to Everything (V2X), systems using other communication methods, and next-generation systems expanded based on them. In addition, a combination of multiple systems (for example, a combination of LTE or LTE-A with 5G, etc.) may also be applied.

FIG. 2 is an interactive schematic diagram of a communication method according to an embodiment of the present disclosure. As shown in FIG. 2, the embodiment of the present disclosure relates to a communication method, and the method includes the following steps.

In step S201, the network device 102 sends a data collection configuration to the terminal 101.

In some embodiments, terms such as "send", "transmit", "report", "deliver", "transmit", "bidirectional transmission", "send and/or receive" can be used interchangeably.

In some embodiments, the terminal 101 receives the data collection configuration sent by the network device 102.

In some embodiments, the data collection configuration is used to direct the terminal to collect data.

In some embodiments, the data collection configuration is used to guide the terminal to obtain a data set. Optionally, the data set includes one or more data. Optionally, the data in the data set may be obtained by the terminal performing multiple acquisition operations. Optionally, the data in the data set may be obtained by the terminal in multiple measurement processes. The measurement includes at least one of a beam measurement and a cell measurement.

In some embodiments, the data collection configuration is used to configure parameters involved in the process of collecting data by the terminal. For example, the data collection configuration is used to configure parameters such as a condition, an opportunity, and manner for the terminal to obtain data.

In some embodiments, the name of the data collection configuration is not limited, and it can be, for example, a first configuration, a data acquisition configuration, a data storage configuration, a data sampling configuration, etc.

In some embodiments, the data collection configuration includes at least one of a trigger condition, a start time and an end time, a first duration, a preset area list, a preset geographic location coordinate, and a preset period. The application of individual parameters in the data collection configuration is described in the following embodiments, which are not illustrated here.

In some embodiments, the manner of sending the data collection configuration to the terminal through the network device in step S201 so that the terminal obtains the data collection configuration can be replaced by other manners for the terminal to obtain the data collection configuration. For example, the data collection configuration can be pre-stored on the terminal. For example, the data collection configuration can be specified by the protocol, and the terminal can obtain the data collection configuration from the protocol. For example, the terminal can obtain the data collection configuration from the upper layer or other terminals. For example, the terminal can obtain the data collection configuration through its own processing.

In step S202, the terminal 101 obtains a data set according to the data collection configuration.

In some embodiments, the data set includes data acquired by the terminal during multiple measurement processes. Optionally, the data acquired by the terminal during each measurement process includes at least one of the following data contents: a beam identifier, a beam measurement result, a cell identifier, a cell measurement result, a location of the terminal, an output value of an AI model on the terminal, an input value of the AI model on the terminal, a frequency of a serving cell of the terminal, time of the terminal, and a speed of the terminal.

In some embodiments, the data set includes data obtained by the terminal performing multiple acquisition operations. Optionally, the data obtained corresponding to each acquisition operation of the terminal includes at least one of the following data contents: a beam identifier, a beam measurement result, a cell identifier, a cell measurement result, a location of the terminal, an output value of an AI model on the terminal, an input value of the AI model on the terminal, a frequency of a serving cell of the terminal, time of the terminal, and a speed of the terminal.

In some embodiments, the data set includes data obtained by the terminal performing multiple acquisition operations during multiple measurements. Optionally, the terminal obtains the data set according to the data collection configuration in the following manner: the terminal acquiring and storing data according to the data collection configuration to obtain the data set. Optionally, one operation of acquiring and storing data may correspond to one measurement. Optionally, one measurement may correspond to one or more operations of acquiring and storing data.

In some embodiments, the name of the data set is not limited, and may be, for example, a data item, a data table, a data packet, first data/target data synthesized from multiple data, a compressed data packet obtained by compressing multiple data, etc.

Optionally, the number of beam identifiers in the above data content is one or more. Optionally, the beam identifier is an identifier of the beam that the network device instructs the terminal to measure. Optionally, the beam identifier is the identifier(s) of the beam(s) corresponding to the top N beam measurement result(s) in the beam measurement result sequence, and the beam measurement result sequence is obtained by sorting the signal quality corresponding to each beam measurement result from high to low, where N is a natural number. Optionally, the multiple beam identifiers include the identifier of the beam that the network device instructs the terminal to measure and the identifier(s) of the beam(s) corresponding to the top N beam measurement result(s) in the beam measurement result sequence. For example, assuming that there are 3 beam measurement results *a*, *b*, and *c*, assuming that the signal qualities corresponding to *a*, *b*, and *c* are sorted from high to low to obtain *a>b>c*, assuming that N is 2, then the identifiers of the beams corresponding to the top two beam measurement results in the beam measurement result sequence *a>b>c* are *a* and *b*.

Optionally, the beam measurement result in the above data content include at least one of Reference Signal Received Power (RSRP), Reference Signal Receiving Quality (RSRQ), Signal to Interference plus Noise Ratio (SINR), Signal to Noise Ratio (SNR), and Channel State Information (CSI).

Optionally, the number of cell identifiers in the above data content is one or more. Optionally, the cell identifier is an identifier of a cell that the network device instructs the terminal to measure. Optionally, the cell identifier is an identifier(s) of a cell(s) corresponding to the top M cell measurement result(s) in a cell measurement result sequence, and the cell measurement result sequence is obtained by sorting the signal quality corresponding to each cell measurement result from high to low, where M is a natural number. Optionally, the multiple cell identifiers include an identifier of a cell that the network device instructs the terminal to measure and an identifier(s) of a cell(s) corresponding to the top N cell measurement result(s) in the cell measurement result sequence. For example, assuming that there are 3 cell measurement results *d*, *e*, and *f*, assuming that the signal qualities corresponding to *d*, *e*, and *f* are sorted from high to low to obtain *d>e>f*, assuming that M is 1, then the identifier of the cell corresponding to the top one cell measurement result in the cell measurement result sequence *d>e>f* is *d*.

Optionally, the cell measurement result in the above data content includes at least one of RSRP, RSRQ, SINR, SNR, and CSI.

It should be explained that the beam measurement refers to the evaluation of the received signal quality at the gNB or UE. The cell measurement is the evaluation of the signal strength or quality of the serving cell and neighboring cell(s) when the terminal is switching to a cell with a stronger signal or when a new carrier (component carrier, CC) needs to be added in carrier aggregation.

Optionally, the location of the terminal in the above data content may include any of the following locations: the location corresponding to when the terminal acquires the beam identifier, the location corresponding to when the terminal acquires the beam measurement result, the location corresponding to when the terminal acquires the cell identifier, the location corresponding to when the terminal acquires the cell measurement result, the location corresponding to when the terminal acquires the output value of the AI model on the terminal, the location corresponding to when the AI model on the terminal outputs data, the location corresponding to when the terminal acquires the input value of the AI model on the terminal, the location corresponding to when the input value of the AI model is input into the AI model on the terminal, the location corresponding to when the terminal acquires the speed of the terminal, and the location corresponding to when the frequency of the serving cell of the terminal is acquired.

Optionally, the frequency of the serving cell of the terminal in the above data content may include any of the following frequencies: the frequency of the serving cell corresponding to when the terminal acquires the beam identifier, the frequency of the serving cell corresponding to when the terminal acquires the beam measurement result, the frequency of the serving cell corresponding to when the terminal acquires the cell identifier, the frequency of the serving cell corresponding to when the terminal acquires the cell measurement result, the frequency of the serving cell corresponding to when the terminal acquires location information, the frequency of the serving cell corresponding to when the terminal acquires the output value of the AI model on the terminal, the frequency of the serving cell corresponding to when the AI model on the terminal outputs data, the frequency of the serving cell corresponding to when the terminal acquires the input value of the AI model on the terminal, the frequency of the serving cell corresponding to when the input value of the AI model is input into the AI model on the terminal, and the frequency of the serving cell corresponding to when the terminal acquires the speed of the terminal.

Optionally, the time of the terminal in the above data content may include any of the following time: the time when the terminal acquires the beam identifier, the time when the terminal acquires the beam measurement result, the time when the terminal acquires the cell identifier, the time when the terminal acquires the cell measurement result, the time when the terminal acquires the location information, the time when the terminal acquires the output value of the AI model, the time when the AI model on the terminal outputs data, the time when the terminal acquires the input value of the AI model on the terminal, the time when the input value of the AI model is input into the AI model on the terminal, the time to acquire the frequency of the serving cell of the terminal, and the time to acquire the speed of the terminal.

In some embodiments, the time in the embodiments of the present disclosure can be either Universal Time Coordinated (UTC) or system time. It should be noted that the system time is determined by the system frame number.

In some embodiments, terms such as "moment", "time point", "time", and "time position" can be interchangeable, and terms such as "duration", "period", "time window", "window", and "time" can be interchangeable.

Optionally, the speed of the terminal in the above data content may include any of the following speeds: the speed corresponding to when the terminal acquires the beam identifier, the speed corresponding to when the terminal acquires the beam measurement result, the speed corresponding to when the terminal acquires the cell identifier, the speed corresponding to when the terminal acquires the cell measurement result, the speed corresponding to when the terminal acquires the location information, the speed corresponding to when the terminal acquires the output value of the AI model on the terminal, the speed corresponding to when the AI model on the terminal outputs data, the speed corresponding to when the terminal acquires the input value of the AI model on the terminal, the speed of the terminal corresponding to when the input value of the AI model is input into the AI model on the terminal, and the speed corresponding to when the terminal acquires the frequency of the serving cell of the terminal.

In some embodiments, the speed may refer to the moving speed of the terminal. Optionally, the moving speed of the terminal may be described by words such as high speed, medium speed, and low speed. Optionally, the moving speed of the terminal may be described by the distance traveled within a period of time. Optionally, the moving speed of the terminal may be described by the number of cell changes within a period of time.

Optionally, the data collection configuration includes a trigger condition, which is used to trigger the terminal to execute acquisition and storage of data. Optionally, the trigger condition includes at least one of the following conditions: the current time is within a preset time range, the terminal is located in a preset area, the volume of data in the data set is less than a first threshold, the beam measurement result meets the first preset condition, the cell measurement result meets the second preset condition, the mobile state of the terminal meets the third preset condition, the performance of the AI model on the terminal meets the fourth preset condition, the data distribution characteristic of the input data of the AI model on the terminal meets the fifth preset condition, and the data distribution characteristic of the output data of the AI model on the terminal meets the sixth preset condition.

In some implementations, the preset time range involved in the above conditions can be pre-configured on the terminal. For example, the data collection configuration includes a start time and an end time. In the case that the preset time range needs to be used, the terminal determines the preset time range according to the start time and the end time in the data collection configuration. In another example, the preset time range is pre-stored on the terminal. In the case that the preset time range needs to be used, the terminal calls the stored preset time range.

In other implementations, the preset time range involved in the above conditions may be dynamically determined. Optionally, the preset time range is a time range corresponding to the operating state of the timer. The preset time range can be dynamically controlled by dynamically controlling the start and stop of the timer. For example, the terminal determines that a first indication sent by the network device is received, and/or the terminal determines that the initial data is acquired, and starts the timer. The terminal determines that the running time of the timer reaches a first duration and stops the timer. Optionally, the first duration is stored on the terminal, for example, the data collection configuration includes the first duration. Optionally, the first indication is used by the network device to instruct the terminal to start the timer. The name of the first indication is not limited, and it is, for example, a timer start instruction.

In other examples, the terminal receives a timer start instruction sent by the network device and starts the timer. The terminal stops the timer when the terminal receives a timer stop instruction sent by the network device. This manner can also control the start and stop of the timer.

In some embodiments, the preset area involved in the above conditions can be represented according to a cell identifier and a geographic location coordinate. Optionally, a preset area list is stored on the terminal, and the preset area list includes at least one cell identifier. For example, the data collection configuration includes a preset area list. Optionally, the terminal determines whether the terminal is located in the preset area by determining whether the preset area list includes the identifier of the terminal's serving cell. For example, the terminal determines that the terminal is located in the preset area in the case that it is determined that the preset area list includes the identifier of the terminal's serving cell.

Optionally, a preset geographic location coordinate is stored on the terminal. For example, the data collection configuration on the terminal includes a preset geographic location coordinate. Optionally, the terminal determines whether the terminal is located in the preset area by determining whether the location of the terminal is within a location range determined according to the preset geographic location coordinate. For example, the terminal determines that the terminal is located in the preset area when determining that the location of the terminal is within a location range determined according to the preset geographic location coordinate.

In some embodiments, the implementation of determining whether the location of the terminal is within the location range determined according to the preset geographic location coordinate may be to determine the distance between the location of the terminal and the preset geographic location coordinate, and if the distance is less than a distance threshold, then it is determined that the location of the terminal is within the location range determined according to the preset geographic location coordinate. If the distance is greater than or equal to the distance threshold, then it is determined that the location of the terminal is not within the location range determined according to the preset geographic location coordinate. The present disclosure does not limit the value of the distance threshold.

In some embodiments, the first threshold in the above conditions is a preset value, and the first threshold can be determined according to information such as the terminal reporting capability, an uplink resource, etc. The present disclosure does not limit the value of the first threshold.

In some embodiments, the beam measurement result includes RSRP, RSRQ, SINR, SNR, and CSI. For example, the beam measurement result meets the first preset condition, which may mean that when the value of at least one element among RSRP, RSRQ, SINR, SNR, and CSI is greater than a preset threshold, it indicates that the beam measurement result meets the first preset condition. In another example, the beam measurement result meets the first preset condition, which may mean that in the case that the value of at least one element among RSRP, RSRQ, SINR, SNR, and CSI is less than a preset threshold, it indicates that the beam measurement result meets the first preset condition. In another example, the beam measurement result meets the first preset condition, which may mean that in the case that the value of at least one element among RSRP, RSRQ, SINR, SNR, and CSI is within a preset threshold interval, it indicates that the beam measurement result meets the first preset condition.

In some embodiments, the cell measurement result includes RSRP, RSRQ, SINR, SNR, and CSI. For example, the cell measurement result meets the second preset condition, which may mean that when the value of at least one element of RSRP, RSRQ, SINR, SNR, and CSI is greater than a preset threshold, or less than a preset threshold, or within a preset threshold interval, it indicates that the cell measurement result meets the second preset condition.

In some embodiments, the mobile state of the terminal meets the third preset condition, which may mean that when the mobile speed of the terminal is in a high speed interval, a medium speed interval, or a low speed interval, the mobile state of the terminal meets the third preset condition. The speed value range corresponding to each speed interval may be specified by a protocol or configured by the network device.

In some embodiments, the mobile state of the terminal meets the third preset condition, which may mean that the number of cell changes corresponding to the terminal within a preset time period is greater than a preset number threshold, or less than a preset number threshold, or is within a preset number threshold interval, indicating that the mobile state of the terminal meets the third preset condition. The number of cell changes includes the number of cells corresponding to cell selection, cell reselection, and cell handover. The preset number threshold and the preset number threshold interval may be specified by a protocol or configured by the network device.

In some embodiments, the performance of the AI model on the terminal meets the fourth preset condition, which may mean that the accuracy of the AI model meets the fourth preset condition. For example, when the accuracy of the AI model is greater than the accuracy threshold, or less than the accuracy threshold, or within the accuracy threshold interval, it indicates that the performance of the AI model on the terminal meets the fourth preset condition. The accuracy threshold can be specified by the protocol or configured by the network device. The present disclosure does not limit the value of the accuracy threshold.

In some embodiments, the data distribution characteristic of the input data of the AI model on the terminal meets the fifth preset condition, which may mean that at least one of the expectation, variance, standard deviation, and divergence of the input data of the AI model on the terminal meets the fifth preset condition. For example, when any data distribution characteristic of the input data of the AI model on the terminal is greater than the distribution threshold, or less than the distribution threshold, or is within the distribution threshold interval, it indicates that the data distribution characteristic of the input data of the AI model on the terminal meets the fifth preset condition. The distribution threshold can be specified by the protocol or configured by the network device. The present disclosure does not limit the value of the distribution threshold.

In some embodiments, the data distribution characteristic of the output data of the AI model on the terminal meets the sixth preset condition, which may mean that at least one of the expectation, variance, standard deviation, and divergence of the output data of the AI model on the terminal meets the sixth preset condition. For example, when any data distribution characteristic of the output data of the AI model on the terminal is greater than the distribution threshold, or less than the distribution threshold, or is within the distribution threshold interval, it indicates that the data distribution characteristic of the output data of the AI model on the terminal meets the sixth preset condition.

Optionally, a preset period is stored on the terminal, for example, the data collection configuration includes the preset period. Optionally, the implementation of the terminal acquiring and storing data according to the data collection configuration may be in the following manner: the terminal acquiring and storing data according to the preset period to obtain a data set.

In step S203, the terminal 101 sends the data set to the network device 102.

In some embodiments, the network device 102 receives the data set sent by the terminal 101.

In some embodiments, the terminal 101 has an AI model. Optionally, the network device 102 has an AI model. Optionally, the training of the AI model is located on the terminal side or the network side. Optionally, in the case where the training of the AI model is located on the network side, the terminal 101 may send a data set to the network device 102, and the network device 102 trains the AI model according to the data set.

In some embodiments, before the terminal sends a data set to the network device, the terminal needs to determine whether the data sending condition is met. Optionally, the terminal determines that the data sending condition is met and executes step S203.

In some embodiments, the data sending condition includes at least one of the following conditions:
the terminal has an uplink resource, and the uplink resource supports carrying the data set;
the terminal performs measurement reporting, and the signaling used for measurement reporting supports carrying the data set;
a data volume of the data set is greater than or equal to a first threshold;
the terminal is outside the preset area;
the current time is outside the preset time range;
the terminal receives a second indication sent by the network device, where the second indication is used by the network device to instruct the terminal to send the data set.

In some embodiments, the name of the second indication is not limited, and it is, for example, a data sending instruction.

In some embodiments, before the terminal sends the data set to the network device, the terminal sends a fourth indication to the network device, and the fourth indication is used for the terminal to indicate to the network device that the data set is stored on the terminal. The network device receives the fourth indication, and if the network device needs the terminal to send the data set, the network device feeds back the fifth indication. The terminal determines that it receives the fifth indication sent by the network device and sends the data set to the network device. The fifth indication is used by the network device to instruct the terminal to send the data set.

In some embodiments, the name of the fourth indication is not limited, and it is, for example, a notification message, and the notification message is used to notify that there is a data set that can be sent on the terminal.

In some embodiments, the name of the fifth indication is not limited, and it is, for example, a data set sending instruction.

In step S204, the network device 102 executes a first task according to the data set.

In some embodiments, the data set is used by the network device to perform a first task. The first task includes but is not limited to training an AI model, updating an AI model, controlling an AI model, conducting a simulation experiment, performing big data analysis, and building a database.

In some embodiments, the network device 102 updates the AI model according to the data set. The network device 102 sends the updated AI model or AI model update information to the terminal 101. The terminal 101 updates the local AI model of the terminal 101 according to the updated AI model or AI model update information.

In step S205, the terminal 101 deletes the data set and/or data collection configuration.

Optionally, before step S205, the terminal can first determine whether a data deletion condition is met. If the terminal determines that the data deletion condition is met, the terminal executes step S205.

In some embodiments, the data deletion condition includes at least one of the following conditions:
the terminal has successfully sent a data set to the network device, the terminal is outside a preset area, the current time is outside a preset time range, the storage duration of the data set is greater than or equal to a second threshold, the terminal switches from a connected state to an idle state, the terminal switches from a connected state to an inactive state, and the terminal receives a third indication sent by the network device.

The second threshold is, for example, 24 hours, 48 hours, etc. The present disclosure does not limit the value of the second threshold.

In some embodiments, the third indication is used by the network device to instruct the terminal to delete the data set and/or the data collection configuration. The name of the third indication is not limited, and it is, for example, a data deletion instruction.

The communication method involved in the embodiments of the present disclosure may include at least one of steps S201 to S205. For example, step S203 can be implemented as an independent embodiment, step S202 and step S203 can be implemented as an independent embodiment, and step S203 and step S204 can be implemented as an independent embodiment, but are not limited thereto.

In some embodiments, step S204 and step S205 can be executed in an exchanged order or simultaneously.

In some embodiments, steps S201, S202, S204, and S205 are optional, and one or more of these steps can be omitted or replaced in different embodiments.

In some embodiments, steps S201, S202, S203, and S205 are optional, and one or more of these steps can be omitted or replaced in different embodiments.

In some embodiments, reference may be made to other optional implementations recorded before or after the description corresponding to FIG. 2.

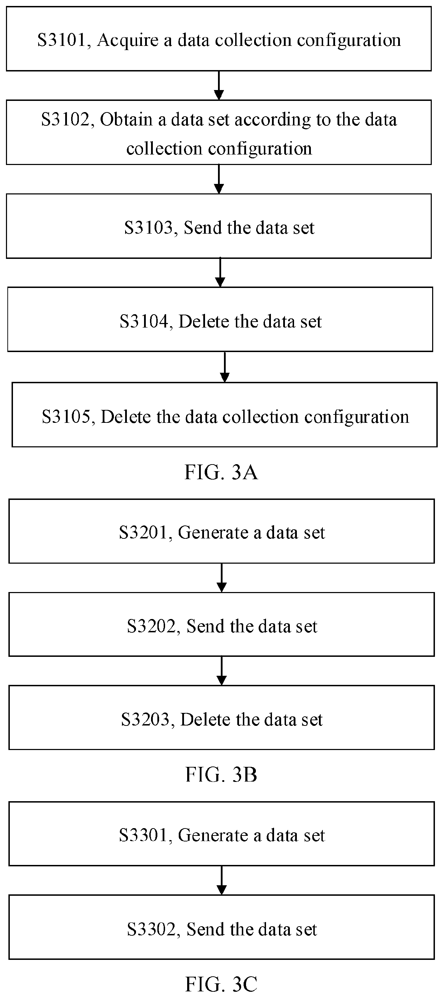

FIG. 3A is a flowchart of a communication method according to an embodiment of the present disclosure. As shown in FIG. 3A, the embodiment of the present disclosure relates to a communication method, which is executed by a terminal, and the method includes the following steps.

In step S3101, a data collection configuration is acquired.

The optional implementation of step S3101 can refer to the optional implementation of step S201 in FIG. 2 and other related parts in the embodiment involved in FIG. 2, which will not be described in detail here.

In some embodiments, the terminal 101 receives the data collection configuration sent by the network device 102, but is not limited thereto and may also receive the data collection configuration sent by other entities.

In some embodiments, the terminal 101 acquires a data collection configuration specified by a protocol.

In some embodiments, the terminal 101 acquires a data collection configuration from an upper layer(s).

In some embodiments, the terminal 101 performs processing to obtain a data collection configuration.

In some embodiments, step S3101 is omitted, and the terminal 101 autonomously implements the functions indicated by the data collection configuration, or the above functions are default or acquiescent.

In step S3102, a data set is obtained according to the data collection configuration.

The optional implementation of step S3102 can refer to the optional implementation of step S202 in FIG. 2 and other related parts in the embodiment involved in FIG. 2, which will not be described in detail here.

In some embodiments, the data set is determined based on the data collection configuration.

In step S3103, the data set is sent.

The optional implementation of step S3103 can refer to the optional implementation of step S203 in FIG. 2 and other related parts in the embodiment involved in FIG. 2, which will not be described in detail here.

In some embodiments, the terminal 101 sends a data set to the network device 102. However, this is not limited thereto, and the data set may also be sent to other entities.

Optionally, the data set is used for the network device 102 to perform the first task. The optional implementation thereof can refer to the optional implementation of step S204 in FIG. 2 and other related parts in the embodiment involved in FIG. 2, which will not be described in detail here.

In step S3104, the data set is deleted.

The optional implementation of step S3104 can refer to the optional implementation of step S205 in FIG. 2 and other related parts in the embodiment involved in FIG. 2, which will not be described in detail here.

In step S3105, the data collection configuration is deleted.

The optional implementation of step S3105 can refer to the optional implementation of step S205 in FIG. 2 and other related parts in the embodiment involved in FIG. 2, which will not be described in detail here.

The communication method involved in the embodiments of the present disclosure can include at least one of steps S3101 to S3105. For example, step S3103 can be implemented as an independent embodiment, and step S3102 and step S3103 can be implemented as an independent embodiment, but are not limited thereto.

In some embodiments, step S3104 and step S3105 can be executed in an interchangeable order or simultaneously.

In some embodiments, step S3101, step S3102, step S3104, and step S3105 are optional, and one or more of these steps can be omitted or replaced in different embodiments.

FIG. 3B is a flowchart of a communication method according to an embodiment of the present disclosure. As shown in FIG. 3B, the embodiment of the present disclosure relates to a communication method. The method is executed by the terminal, and the method includes the following steps.

In step S3201, a data set is generated.

The optional implementation of step S3201 can refer to the optional implementation of step S202 in FIG. 2, step S3102 in FIG. 3A, and other related parts in the embodiments involved in FIGs. 2 and 3A, which will not be repeated here.

In step S3202, the data set is sent.

The optional implementation of step S3202 can refer to the optional implementation of step S203 in FIG. 2, step S3103 in FIG. 3A, and other related parts in the embodiments involved in FIGs. 2 and 3A, which will not be repeated here.

In step S3203, the data set is deleted.

The optional implementation of step S3203 can refer to the optional implementation of step S204 in FIG. 2, step S3104 in FIG. 3A, and other related parts in the embodiments involved in FIGs. 2 and 3A, which will not be repeated here.

The communication method involved in the embodiment of the present disclosure can include at least one of steps S3201 to S3203. For example, step S3202 m can ay be implemented as an independent embodiment, step S3201 and step S3202 can be implemented as an independent embodiment, and step S3202 and step S3203 can be implemented as an independent embodiment, but are not limited thereto.

In some embodiments, step S3201 and step S3203 are optional, and one or more of these steps can be omitted or replaced in different embodiments.

In the embodiment of the present disclosure, step S3202 can be combined with step S3102 of FIG. 3A, and step S3202 can be combined with step S3104 of FIG. 3A.

FIG. 3C is a flowchart of a communication method according to an embodiment of the present disclosure. As shown in FIG. 3C, the embodiment of the present disclosure relates to a communication method, which is executed by a terminal, and the method includes the following steps.

In step S3301, a data set is generated.

The optional implementation of step S3301 can refer to the optional implementation of step S202 in FIG. 2, step S3102 in FIG. 3A, and other related parts in the embodiments involved in FIGs. 2 and 3A, which will not be repeated here.

In step S3302, the data set is sent.

The optional implementation of step S3302 can refer to the optional implementation of step S203 in FIG. 2, step S3103 in FIG. 3A, and other related parts in the embodiments involved in FIGs. 2 and 3A, which will not be repeated here.

The communication method involved in the embodiment of the present disclosure may include at least one of step S3301 and step S3302. For example, step S3302 can be implemented as an independent embodiment, but is not limited thereto.

In some embodiments, step S3301 is optional and can be omitted or replaced in different embodiments.

In the embodiment of the present disclosure, step S3302 can be combined with step S3102 of FIG. 3A, and step S3302 can be combined with step S3203 of FIG. 3B.

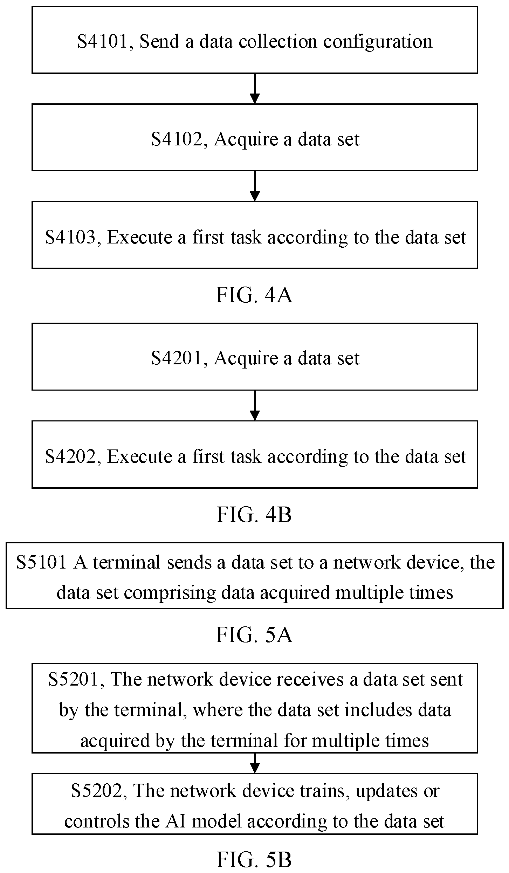

FIG. 4A is a flowchart of a communication method according to an embodiment of the present disclosure. As shown in FIG. 4A, the embodiment of the present disclosure relates to a communication method, which is executed by a network device, and the method includes the following steps.

In step S4101, a data collection configuration is sent.

The optional implementation of step S4101 can refer to the optional implementation of step S201 in FIG. 2 and other related parts in the embodiment involved in FIG. 2, which will not be described in detail here.

In some embodiments, the network device 102 sends the data collection configuration to the terminal 101. However, this is not limited thereto, and the data collection configuration may also be sent to other entities.

In step S4102, a data set is acquired.

The optional implementation of step S4102 can refer to the optional implementation of step S203 in FIG. 2 and other related parts in the embodiment involved in FIG. 2, which will not be described in detail here.

In some embodiments, the network device 102 receives a data set sent by the terminal 101, but is not limited thereto and may also receive a data set sent by other entities.

In some embodiments, the network device 102 acquires a data set specified by the protocol.

In some embodiments, the network device 102 acquires a data set from an upper layer(s).

In some embodiments, the network device 102 performs processing to obtain a data set.

In some embodiments, step S4102 is omitted, and the network device 102 autonomously implements the functions indicated by the data set, or the above functions are default or acquiescent.

In step S4103, a first task is executed according to the data set.

The optional implementation of step S4103 can refer to the optional implementation of step S204 in FIG. 2 and other related parts in the embodiment involved in FIG. 2, which will not be described in detail here.

In some embodiments, the first task includes but is not limited to training an AI models, updating an AI model, controlling an AI model, conducting a simulation experiment, performing big data analysis, building a database, etc.

The communication method involved in the embodiment of the present disclosure may include at least one of steps S4101 to S4103. For example, step S4102 can be implemented as an independent embodiment, and steps S4102 and S4103 can be implemented as an independent embodiment, but are not limited thereto.

In some embodiments, steps S4101 and S4103 are optional, and one or more of these steps may be omitted or replaced in different embodiments.

FIG. 4B is a flowchart of a communication method according to an embodiment of the present disclosure. As shown in FIG. 4B, the embodiment of the present disclosure relates to a communication method, which is executed by a network device, and the method includes the following steps.

In step S4201, a data set is obtained.

The optional implementation of step S4201 can refer to the optional implementation of step S203 in FIG. 2, step S4102 in FIG. 4A, and other related parts in the embodiments involved in FIGs. 2 and 4A, which will not be repeated here.

In step S4202, the first task is executed according to the data set.

The optional implementation of step S4202 can refer to the optional implementation of step S204 in FIG. 2, step S4103 in FIG. 4A, and other related parts in the embodiments involved in FIGs. 2 and 4A, which will not be repeated here.

The communication method involved in the embodiment of the present disclosure may include at least one of step S4201 and step S4202. For example, step S4201 can be implemented as an independent embodiment, but is not limited thereto.

In some embodiments, step S4202 is optional and can be omitted or replaced in different embodiments.

In the embodiment of the present disclosure, step S4201 can be combined with step S4101 of FIG. 4A.

FIG. 5A is an interactive schematic diagram of a communication method according to an embodiment of the present disclosure. As shown in FIG. 5A, the embodiment of the present disclosure relates to a communication method, and the method includes the following steps.

In step S5101, the terminal sends a data set to a network device, where the data set includes data acquired multiple times.

The optional implementation of step S5101 can refer to the optional implementation of step S203 in FIG. 2, step S3103 in FIG. 3A, step S4102 in FIG. 4A, and other related parts in the embodiments involved in FIGs. 2, 3A, and 4A, which will not be repeated here.

In some embodiments, the above method may include the method described in the above embodiments of the communication system side, the terminal side, the network device side, etc., which will not be repeated here.

FIG. 5B is an interactive schematic diagram of a communication method according to an embodiment of the present disclosure. As shown in FIG. 5B, the embodiment of the present disclosure relates to a communication method, and the method includes the following steps.

In step S5201, the network device receives a data set sent by the terminal, where the data set includes data acquired by the terminal multiple times.

The optional implementation of step S5201 can refer to the optional implementation of step S203 in FIG. 2, step S3103 in FIG. 3A, step S4102 in FIG. 4A, and other related parts in the embodiments involved in FIGs. 2, 3A, and 4A, which will not be repeated here.

In step S5202, the network device trains, updates or controls the AI model according to the data set.

The optional implementation of step S5202 can refer to the optional implementation of step S204 in FIG. 2, step S3103 in FIG. 3A, step S4103 in FIG. 4A, and other related parts in the embodiments involved in FIGs. 2, 3A, and 4A, which will not be repeated here.

In some embodiments, the above method may include the method described in the above embodiments of the communication system side, the terminal side, the network device side, etc., which will not be repeated here.

The application of the AI model in the embodiments of the present disclosure is described below.

In some embodiments, in a 5G system, the AI model can be used for prediction and reasoning to improve system performance.

In some embodiments, during the beam management process, the UE can reduce the number of measured beams, and the UE or base station obtains the optimal beam through AI model reasoning.

In some embodiments, during the CSI reporting process, the UE can compress the CSI measurement result through the AI model and report the compressed CSI measurement result to the base station. After receiving the result, the base station restores the original CSI measurement result through the AI model, thereby reducing the number of signaling bits required during the reporting process.

The training of AI models requires the collection of a large amount of data. If the training of AI models is located on the network side, the UE needs to report the collected data to the network.

When the UE is in a connected state, in the measurement reporting mechanism, the UE may report the latest measurement result. If the UE needs to report a large amount of data, it needs to report multiple times, resulting in additional signaling consumption. To this end, the present disclosure proposes a communication method, which is applied to a communication system, and the communication system includes a terminal and a network device. The terminal is used to perform the following processing:

First embodiment: the UE stores data obtained through multiple measurements according to the data collection configuration, and reports the stored data to the network.

As an embodiment, the network performs AI model training or updating according to the received data.

Second embodiment: at least based on the first embodiment, the UE determines to acquire and store data according to at least one of the following conditions:
being located in a specific time frame;
the UE being located in a specific area;
the volume of stored data has not reached a maximum value, which may be configured by the network or specified by a protocol.

The channel measurement result of the cell or beam meets a certain threshold condition.

The performance of the AI model meets a certain condition. As an embodiment, it may be that the accuracy of the output meets a certain threshold condition.

The mobility state of the UE meets the requirement. The mobility state can be determined by the UE's moving speed or a limited mobility state. The mobility state can be high, medium or low. The UE can determine its mobility state according to the number of cell changes within a certain period of time. The cell change includes cell selection, cell reselection and handover. The UE can also determine the mobility state according to its moving speed. Each mobility state corresponds to one speed interval. The corresponding relationship can be specified by the protocol or configured by the network.

The data distribution meets the requirement. The data can be the input or output data of the AI model. The data distribution includes the expectation or variance or standard deviation or divergence of the data.

Third embodiment: at least based on the first embodiment, the UE determines to acquire data content according to the network configuration,

As an embodiment, the data content may be an identifier of the beam, a measurement result of the beam, an identifier of the cell, a measurement result of the cell, a location of the UE, an AI output value, a frequency at which the measurement result is acquired, the time at which the data is acquired, a location at which the data is acquired, and a speed at which the data is acquired. The measurement result may be RSRP, RSRQ or SINR or CSI. The time may be UTC time or system time, and the system time is determined by the system frame number.

As an embodiment, the identifier of the cell or beam collected in the data may be configured by the network, or may be determined by the UE according to the measurement result. As an embodiment, the UE collects the measurement result or identifier of one or more cells or beams with the best measurement result. The number may be configured by the network.

Fourth embodiment: at least based on the second embodiment, the time range can be determined by any of the following.

UTC time range. As an embodiment, it is determined by the UTC start time and end time. The end time can be determined by the UTC start time and one time length.

The timer is running. As an embodiment, the timer can be started by a network instruction or by the UE determining that a condition is met. The condition can be that the UE collects the initial data. The timer length is configured by the network.

Fifth embodiment: at least based on the second embodiment, being located in the specific area can be determined by at least one of the following.

The serving cell of the UE is in the specific cell list, which carries the identifier of the network cell and can be configured by the network.

The location of the UE is in a specific area. The specific area is determined by the geographic location coordinate and can be configured by the network.

Sixth embodiment: at least based on the first embodiment, the UE acquires data at a specific period, and the period can be configured by the network.

Seventh embodiment: at least based on the first embodiment, the UE determines to report the stored data to the network according to at least one of the following:
the UE has an uplink resource and can carry stored data;
the UE performs measurement reporting and can carry stored data;
the volume of data stored in the UE has reached the maximum value.
the UE leaves a specific area;
the UE does not meet the specified time range.
a reporting instruction sent by the network is received.

Eighth embodiment: at least based on the first embodiment, the UE determines to delete the stored data and/or delete the stored data collection configuration according to at least one of the following:
the UE has reported the stored data to the network;
the UE leaves a specific area;
the UE does not meet the specified time range;
the time of the stored data has exceeded the specified time, the specified time may be configured by the network or specified by a protocol, and as an embodiment, when the data stored by the UE exceeds 48 hours, the UE deletes the stored data;
the UE leaves the connected state;
a network deletion instruction is received.

Ninth embodiment: before the seventh embodiment, a first indication is sent to the network, indicating that data that can be reported is stored.

The network device is used to perform the following processing:
receiving a data set. The AI model is trained, updated, or controlled according to the data set.

In the embodiments of the present disclosure, part or all of the steps and their optional implementations may be arbitrarily combined with part or all of the steps in other embodiments, or may be arbitrarily combined with optional implementations of other embodiments.

The embodiments of the present disclosure also propose an apparatus for implementing any of the above methods, for example, an apparatus is proposed, the above apparatus includes a unit or module for implementing each step performed by the terminal in any of the above methods. For another example, another apparatus is also proposed, including a unit or module for implementing each step performed by the network device (such as an access network device, a core network function node, a core network device, etc.) in any of the above methods.

It should be understood that the division of the units or modules in the above apparatus is only a division of logical functions, and in actual implementation, they can be fully or partially integrated into one physical entity, or they can be physically separated. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus, where the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be realized by designing the hardware circuits. The hardware circuits may be understood as one or more processors. For example, in one implementation, the hardware circuits are application-specific integrated circuits (ASICs), and the functions of some or all of the above units or modules are realized by designing the logical relationship of the components within the circuits. For another example, in another implementation, the hardware circuits may be implemented by programmable logic devices (PLDs). For example, field programmable gate arrays (FPGAs) may include a large number of logic gate circuits, and the connection relationship between the logic gate circuits may be configured by configuration files, thereby realizing the functions of some or all of the above units or modules. All units or modules of the above apparatuses can be implemented entirely through the processor calling software, or entirely through hardware circuits, or partially through the processor calling software, and the remaining part through hardware circuits.

In the embodiments of the present disclosure, the processor is a circuit with signal processing capability. In one implementation, the processor may be a circuit with instruction reading and execution capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, such as a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it can also be a hardware circuit designed for artificial intelligence, which can be understood as ASIC, such as Neural Network Processing Unit (NPU), Tensor Processing Unit (TPU), Deep Learning Processing Unit (DPU), etc.

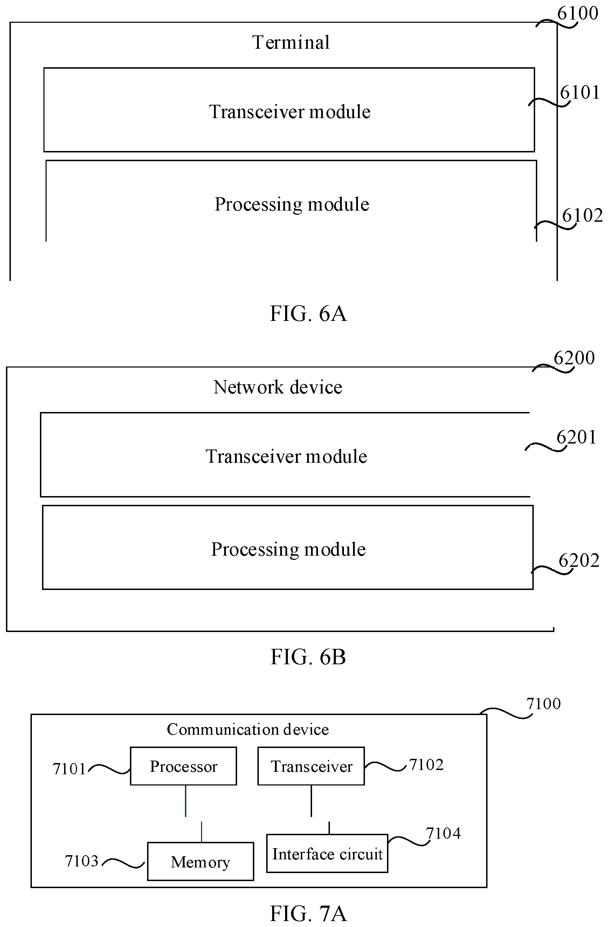

FIG. 6A is a schematic diagram of the structure of the terminal proposed in an embodiment of the present disclosure. As shown in FIG. 6A, the terminal 6100 may include: at least one of a transceiver module 6101, a processing module 6102, etc. In some embodiments, the transceiver module 6101 is used by the terminal to send a data set to a network device, and the data set includes data acquired by the terminal multiple times. Optionally, the transceiver module 6101 is used to execute at least one of the communication steps such as sending and/or receiving (for example, step S201, step S203, but not limited thereto) executed by the terminal 101 in any of the above methods, which will not be repeated here. Optionally, the processing module 6102 is used to execute at least one of the other steps (for example, step S202, step S205, but not limited thereto) executed by the terminal 1 01 in any of the above methods, which will not be repeated here.

FIG. 6B is a schematic diagram of the structure of a network device proposed in an embodiment of the present disclosure. As shown in FIG. 6B, the network device 6200 may include: at least one of a transceiver module 6201, a processing module 6202, etc. In some embodiments, the transceiver module 6201 is used for the network device to receive a data set sent by a terminal, and the data set includes data acquired by the terminal multiple times. In some embodiments, the processing module 6202 is used for the network device to train, update or control an AI model according to the data set. Optionally, the transceiver module 6201 is used to perform at least one of the communication steps such as sending and/or receiving (for example, step S201, step S203, but not limited thereto) performed by the network device 102 in any of the above methods, which will not be repeated here. Optionally, the processing module 6202 is used to perform at least one of the other steps (for example, step S204, but not limited thereto) performed by the network device 102 in any of the above methods, which will not be repeated here.

In some embodiments, the transceiver module may include a sending module and/or a receiving module, and the sending module and the receiving module may be separate or integrated. Optionally, the transceiver module may be interchangeable with the transceiver.

In some embodiments, the processing module can be one module or include multiple submodules. Optionally, the multiple submodules respectively execute all or part of the steps required to be executed by the processing module. Optionally, the processing module can be replaced with the processor.

FIG. 7A is a schematic diagram of the structure of a communication device 7100 proposed in an embodiment of the present disclosure. The communication device 7100 may be a network device (e.g., an access network device, a core network device, etc.), or a terminal (e.g., a user device, etc.), or a chip, a chip system, or a processor that supports a network device to implement any of the above methods, or a chip, a chip system, or a processor that supports a terminal to implement any of the above methods. The communication device 7100 may be used to implement the method described in the above method embodiments, and the details may refer to the description in the above method embodiments.

As shown in FIG. 7A, the communication device 7100 includes one or more processors 7101. The processor 7101 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute the program, and process the data of the program. Optionally, the communication device 7100 is used to execute any of the above methods. Optionally, one or more processors 7101 are used to call instructions so that the communication device 7100 executes any of the above methods.

In some embodiments, the communication device 7100 further includes one or more transceivers 7102. When the communication device 7100 includes one or more transceivers 7102, the transceiver 7102 performs at least one of the communication steps such as sending and/or receiving in the above methods (for example, step S201, step S203, but not limited thereto), and the processor 7101 performs at least one of the other steps (for example, step S202, step S204, step S205, but not limited thereto). In an optional embodiment, the transceiver may include a receiver and/or a transmitter, and the receiver and the transmitter may be separated or integrated together. Optionally, the terms such as transceiver, transceiver unit, transceiver machine, transceiver circuit, interface circuit, interface, etc. may be replaced with each other, the terms such as transmitter, transmitting unit, transmitter machine, transmitting circuit, etc. may be replaced with each other, and the terms such as receiver, receiving unit, receiver machine, receiving circuit, etc. may be replaced with each other.

In some embodiments, the communication device 7100 further includes one or more memories 7103 for storing data. Optionally, all or part of the memories 7103 may also be outside the communication device 7100. In an optional embodiment, the communication device 7100 may include one or more interface circuits 7104. Optionally, the interface circuit 7104 is connected to the memory 7102, and the interface circuit 7104 may be used to receive data from the memory 7102 or other apparatuses, and may be used to send data to the memory 7102 or other apparatuses. For example, the interface circuit 7104 may read the data stored in the memory 7102 and send the data to the processor 7101.

The communication device 7100 described in the above embodiments may be a network device or a terminal, but the scope of the communication device 7100 described in the present disclosure is not limited thereto, and the structure of the communication device 7100 may not be limited by FIG. 7A. The communication device may be an independent device or may be part of a relatively large device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

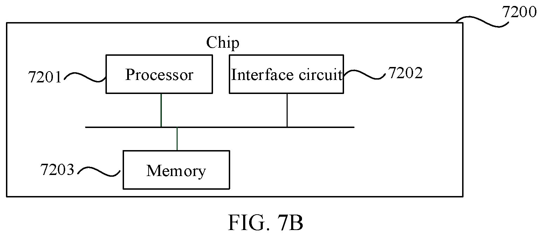

FIG. 7B is a schematic diagram of the structure of a chip 7200 provided in an embodiment of the present disclosure. In the case where the communication device 7100 may be a chip or a chip system, reference may be made to the schematic diagram of the structure of the chip 7200 shown in FIG. 7B, but the present disclosure is not limited thereto.

The chip 7200 includes one or more processors 7201. The chip 7200 is configured to execute any of the above methods.

In some embodiments, the chip 7200 further includes one or more interface circuits 7202. Optionally, the terms such as interface circuit, interface, transceiver pin, etc. can be interchangeable. In some embodiments, the chip 7200 further includes one or more memories 7203 for storing data. Optionally, all or part of the memory 7203 can be outside the chip 7200. Optionally, the interface circuit 7202 is connected to the memory 7203, and the interface circuit 7202 can be used to receive data from the memory 7203 or other apparatuses, and the interface circuit 7202 can be used to send data to the memory 7203 or other apparatuses. For example, the interface circuit 7202 can read the data stored in the memory 7203 and send the data to the processor 7201.

In some embodiments, the interface circuit 7202 performs at least one of the communication steps such as sending and/or receiving in the above method (for example, step S201, step S203, but not limited thereto). The interface circuit 7202 performs the communication steps such as sending and/or receiving in the above method, for example, means that the interface circuit 7202 performs data interaction between the processor 7201, the chip 7200, the memory 7203, or the transceiver device. In some embodiments, the processor 7201 performs at least one of the other steps (for example, step S202, step S204, step S205, but not limited thereto).

The modules and/or devices described in the embodiments such as virtual apparatuses, physical apparatuses, chips, etc. can be combined or separated as needed. Optionally, some or all steps can also be performed by multiple modules and/or devices in collaboration, which is not limited here.

The present disclosure also proposes a storage medium, on which instructions are stored, and when the instructions are executed on the communication device 7100, the communication device 7100 executes any of the above methods. Optionally, the storage medium is an electronic storage medium. Optionally, the storage medium is a computer-readable storage medium, but is not limited thereto, and it can also be a storage medium readable by other apparatuses. Optionally, the storage medium can be a non-transitory storage medium, but is not limited thereto, and it can also be a temporary storage medium.

The present disclosure also proposes a program product, which, when executed by the communication device 7100, enables the communication device 7100 to execute any of the above methods. Optionally, the program product is a computer program product.

The present disclosure also proposes a computer program, which, when executed on a computer, causes the computer to execute any one of the above methods.

## Claims

1. A communication method, wherein the method comprises:
sending, by a terminal, a data set to a network device, wherein the data set comprises data acquired multiple times.

2. The method according to claim 1, wherein the data set is used for the network device to train, update or control an artificial intelligence (AI) model.

3. The method according to claim 1 or 2, wherein a data content of the data comprises at least one of:
a beam identifier;
a beam measurement result;
a cell identifier;
a cell measurement result;
a location where the terminal acquires the data;
an output value of an AI model on the terminal;
an input value of the AI model on the terminal;
a frequency of a serving cell of the terminal;
time when the terminal acquires the data; and
a speed at which the terminal acquires the data.

4. The method according to claim 3, wherein the beam identifier is an identifier of a beam that the network device instructs the terminal to measure; or
the beam identifier is an identifier of a beam corresponding to a top N beam measurement result in a beam measurement result sequence, and the beam measurement result sequence is obtained by sorting a signal quality corresponding to each beam measurement result from high to low, wherein N is a natural number.

5. The method according to claim 3 or 4, wherein the cell identifier is an identifier of a cell that the network device instructs the terminal to measure; or
the cell identifier is an identifier of a cell corresponding to a top M cell measurement result in a cell measurement result sequence, and the cell measurement result sequence is obtained by sorting a signal quality corresponding to each cell measurement result from high to low, wherein M is a natural number.

6. The method according to any one of claims 1 to 5, wherein before sending, by the terminal, the data set to the network device, the method comprises:
acquiring and storing, by the terminal, the data according to a data collection configuration.

7. The method according to claim 6, wherein the data collection configuration comprises a trigger condition, and the trigger condition is used to trigger an execution of acquiring and storing the data;
the trigger condition comprises at least one of following conditions:
current time is within a preset time range;
the terminal is located in a preset area;
a data volume of the data set is less than a first threshold;
a beam measurement result meets a first preset condition;
a cell measurement result meets a second preset condition;
a mobile state of the terminal meets a third preset condition;
a performance of an AI model on the terminal meets a fourth preset condition;
a data distribution characteristic of input data of the AI model on the terminal meets a fifth preset condition; and
a data distribution characteristic of output data of the AI model on the terminal meets a sixth preset condition.

8. The method according to claim 7, wherein the data collection configuration comprises a start time and an end time;
the method further comprises:
determining, by the terminal, the preset time range according to the start time and the end time.

9. The method according to claim 7, wherein the preset time range is a time range corresponding to a running state of a timer;
the data collection configuration comprises a first duration;
the method further comprises:
determining, by the terminal, that a first indication sent by the network device is received, and/or determining that an initial data is acquired, starting the timer, wherein the first indication is used by the network device to instruct the terminal to start the timer;
determining, by the terminal, that a running duration of the timer reaches the first duration, stopping the timer.

10. The method according to claim 7, wherein the data collection configuration comprises a preset area list, and the preset area list comprises at least one cell identifier; and
the method further comprises:
determining, by the terminal, that the preset area list comprises an identifier of a serving cell of the terminal, and determining that the terminal is located in the preset area.

11. The method according to claim 7, wherein the data collection configuration comprises a preset geographic location coordinate; and
the method further comprises:
determining, by the terminal, that a location of the terminal is within a location range determined according to the preset geographical location coordinate, and determining that the terminal is located in the preset area.

12. The method according to any one of claims 6 to 11, wherein the data collection configuration comprises a preset period; and
acquiring and storing, by the terminal, the data according to the data collection configuration, comprises:
acquiring and storing, by the terminal, the data according to the preset period.

13. The method according to any one of claims 1 to 12, wherein before sending, by the terminal, the data set to the network device, the method comprises:
determining, by the terminal, that a data sending condition is met.

14. The method according to claim 13, wherein the data sending condition comprises at least one of following conditions:
the terminal has an uplink resource, and the uplink resource supports carrying the data set;
the terminal performs measurement reporting, and a signaling used for measurement reporting supports carrying the data set;
a data volume of the data set is greater than or equal to a first threshold;
the terminal is located outside a preset area;
current time is outside a preset time range; and
the terminal receives a second indication sent by the network device, wherein the second indication is used by the network device to instruct the terminal to send the data set.

15. The method according to any one of claims 1 to 14, wherein the method further comprises:
determining, by the terminal, that a data deletion condition is met, deleting the data set and/or a data collection configuration.

16. The method according to claim 15, wherein the data deletion condition comprises at least one of following conditions:
the terminal has successfully sent the data set to the network device;
the terminal is located outside the preset area;
the current time is outside the preset time range;
a storage duration of the data set is greater than or equal to a second threshold;
the terminal switches from a connected state to an idle state;
the terminal switches from the connected state to an inactive state; and
the terminal receives a third indication sent by the network device, wherein the third indication is used by the network device to instruct the terminal to delete the data set and/or the data collection configuration.

17. The method according to any one of claims 1 to 16, wherein before sending, by the terminal, the data set to the network device, the method comprises:
sending, by the terminal, a fourth indication to the network device, wherein the fourth indication is used by the terminal to indicate to the network device that the data set is stored in the terminal; and
sending, by the terminal, the data set to the network device, comprises:
determining, by the terminal, that a fifth indication sent by the network device is received, sending the data set to the network device, wherein the fifth indication is used by the network device to instruct the terminal to send the data set.

18. A communication method, wherein the method comprises:
receiving, by a network device, a data set sent by a terminal, wherein the data set comprises data acquired by the terminal multiple times; and
training, updating or controlling, by the network device, an AI model according to the data set.

19. The method according to claim 18, wherein a data content of the data comprises at least one of:
a beam identifier;
a beam measurement result;
a cell identifier;
a cell measurement result;
a location where the terminal acquires the data;
an output value of an AI model on the terminal;
an input value of the AI model on the terminal;
a frequency of a serving cell of the terminal;
time when the terminal acquires the data; and
a speed at which the terminal acquires the data.

20. The method according to claim 19, wherein the beam identifier is an identifier of a beam that the network device instructs the terminal to measure; or
the beam identifier is an identifier of a beam corresponding to a top N beam measurement result in a beam measurement result sequence, and the beam measurement result sequence is obtained by the terminal by sorting a signal quality corresponding to each beam measurement result from high to low, wherein N is a natural number.

21. The method according to claim 19 or 20, wherein the cell identifier is an identifier of a cell that the network device instructs the terminal to measure; or
the cell identifier is an identifier of a cell corresponding to a top M cell measurement result in a cell measurement result sequence, and the cell measurement result sequence is obtained by the terminal by sorting a signal quality corresponding to each cell measurement result from high to low, wherein M is a natural number.

22. The method according to any one of claims 18 to 21, wherein before receiving, by the network device, the data set sent by the terminal, the method comprises:
sending, by the network device, a data collection configuration to the terminal, wherein the data collection configuration is used to instruct the terminal to acquire and store the data according to the data collection configuration to obtain the data set.

23. The method according to claim 22, wherein the data collection configuration comprises a trigger condition, and the trigger condition is used for the terminal to trigger an execution of acquiring and storing the data;
the trigger condition comprises at least one of following conditions:
a current time of the terminal is within a preset time range;
the terminal is located in a preset area;
a data volume of the data set is less than a first threshold;
a beam measurement result meets a first preset condition;
a cell measurement result meets a second preset condition;
a mobile state of the terminal meets a third preset condition;
a performance of an AI model on the terminal meets a fourth preset condition;
a data distribution characteristic of input data of the AI model on the terminal meets a fifth preset condition; and
a data distribution characteristic of output data of the AI model on the terminal meets a sixth preset condition.

24. The method according to claim 23, wherein the data collection configuration comprises a start time and an end time, and the start time and the end time are used by the terminal to determine the preset time range.

25. The method according to claim 23, wherein the data collection configuration comprises a first duration; and
the method further comprises:
sending, by the network device, a first indication to the terminal, wherein the first indication is used by the network device to instruct the terminal to start a timer;
the first indication and the first duration are used by the terminal to determine a time range corresponding to a running state of the timer and to determine the preset time range.

26. The method according to claim 23, wherein the data collection configuration comprises a preset area list, and the preset area list comprises at least one cell identifier; and
the preset area list is used by the terminal to determine whether it is located in the preset area.

27. The method according to claim 23, wherein the data collection configuration comprises a preset geographic location coordinate; and
the preset geographic location coordinate is used by the terminal to determine whether it is located in the preset area.

28. The method according to claim 23, wherein the data collection configuration comprises a preset period; and
the preset period is used to instruct the terminal to periodically acquire and store the data.

29. The method according to any one of claims 18 to 28, wherein the data set is sent by the terminal to the network device after determining that a data sending condition is met.

30. The method according to claim 29, wherein the data sending condition comprises at least one of following conditions:
the terminal has an uplink resource, and the uplink resource supports carrying the data set;
the terminal performs measurement reporting, and a signaling used for measurement reporting supports carrying the data set;
a data volume of the data set is greater than or equal to a first threshold;
the terminal is located outside a preset area;
a current time of the terminal is outside a preset time range;
the terminal receives a second indication sent by the network device, wherein the second indication is used by the network device to instruct the terminal to send the data set.

31. The method according to any one of claims 22 to 30, wherein the method further comprises:
sending, by the network device, a third indication to the terminal, wherein the third indication is used by the network device to instruct the terminal to delete the data set and/or the data collection configuration.

32. The method according to any one of claims 18 to 31, wherein before receiving, by the network device, the data set sent by the terminal, the method comprises:
receiving, by the network device, a fourth indication sent by the terminal, wherein the fourth indication is used to indicate that the data set is stored in the terminal; and
sending, by the network device, a fifth indication to the terminal, wherein the fifth indication is used by the network device to instruct the terminal to send the data set.

33. A terminal, wherein the terminal comprises:
a transceiver module, configured to send a data set to a network device, wherein the data set comprises data acquired multiple times.

34. A network device, wherein the network device comprises:
a transceiver module, configured to receive a data set sent by a terminal, wherein the data set comprises data acquired by the terminal multiple times; and
a processing module, configured to train, update or control an AI model according to the data set.

35. A terminal, wherein the terminal comprises:
one or more processors; and
a memory coupled to the processor, wherein the memory stores executable instructions, and when the executable instructions are executed by the processor, the terminal executes the communication method according to any one of claims 1 to 17.

36. A network device, wherein the network device comprises:
one or more processors; and
a memory coupled to the processor, wherein the memory stores executable instructions, and when the executable instructions are executed by the processor, the network device executes the communication method according to any one of claims 18 to 32.

37. A communication system, comprising a terminal and a network device, wherein the terminal is configured to implement the communication method according to any one of claims 1 to 17, and the network device is configured to implement the communication method according to any one of claims 18 to 32.

38. A storage medium storing instructions, wherein when the instructions are executed on a communication device, the communication device executes the communication method according to any one of claims 1 to 32.
